# EUROPEAN PATENT SPECIFICATION

(11) **EP 0 308 490 B1**
(45) Date of publication and mention of the grant of the patent: **25.08.1993**
(21) Application number: 88903619.0
(22) Date of filing: 25.03.1988
(51) Int. Cl.: H01R 13/658

(54) **ELECTRICAL CONNECTOR SHIELDED MEMBER HAVING MOUNTING MEANS**
ABGESCHIRMTES GLIED EINES ELEKTRISCHEN STECKVERBINDERS MIT MONTAGEMITTELN
ELEMENT POURVU DE PIECES DE MONTAGE DESTINE A PROTEGER UN CONNECTEUR

(30) Priority: 30.04.1987 JP 66243/87
(43) Date of publication of application: 29.03.1989
(73) Proprietor: THE WHITAKER CORPORATION, Wilmington, Delaware 19808 (US)
(72) Inventor: FUJIURA, Yoshitsugu, Tokyo (JP)
(74) Representative: Warren, Keith Stanley
(86) International application number: PCT/US88/00940
(87) International publication number: WO 88/08627

(56) References cited:
- EP-A- 0 180 284
- US-A- 4 512 618

## Description

This invention relates to a shielded electrical connector for mounting on a circuit board.

US-A- 4,679,883 discloses a right angle connector having a metal shield surrounding the mating face. Ground straps integral with the metal shield extend to respective mounting faces. An eyelet passes through apertures in a flange and through the ground strap to secure the connector to a printed circuit board and simultaneously provide an electrical path from the metal shield to a ground on the printed circuit board. Thus, for an electrical connector to be mounted on a circuit board and requiring electromagnetic shielding, the connector included a shield member for shielding the connector and separate mounting members for mounting the shielded connector to a circuit board.

Accordingly, a problem arose in that a large number of man-hours was needed for manufacturing and assembly of such a connector. Furthermore, the ground connection between the shield member and the circuit board was not reliable.

The present invention consists in a shielded electrical connector as defined in claim 1.

EP-A-O 180 284 discloses an electrical connector according to the preamble of claim 1.

An embodiment of the present invention will now be describe by way of example with reference to the accompanying drawings in which:
FIGURE 1 is an exploded perspective view showing a shield member and a connector housing; and
FIGURE 2 is a perspective view showing a shield member assembled to the connector housing thereby forming a shielded electrical connector.

A shield member is formed from a sheet of suitable conductive metal and comprises a shield section 1A covering a front surface of an electrical connector housing as well as mounting members 2 integrally formed therewith. Mounting members 2 are utilized to mount the electrical connector onto a circuit board and are soldered thereto to establish a ground connection therewith. Leg sections 2A extend in rearward direction from shield section 1A with mounting members 2 being folded downward at a right angle from leg sections 2A.

A shroud 6 extends forward to shield section 1A. Shroud 6 may be rectangular in shape and have indents 3 located in upper and lower walls thereof. Shroud 6, in the preferred embodiment, has retaining apertures 3A in the sidewalls thereof for receiving latching members of a complementary connector. Further, at both sides of shield section 1A are located threaded holes 4 for securing the connector to a panel. Leg sections 2A are located underneath threaded holes 4. Lugs or securing members 5 are located at the upper end of and on both sides of shield section 1A in alignment with threaded holes 4 and lugs or securing members 7 are located at the rear ends of leg sections 2A. These lugs 5, 7 are adapted to be folded for engagement with recesses 5A, 7A at the upper and back ends of housing 8.

At the lower right and left sides of housing 8 are located L-shaped slots 8A which respectively receive leg sections 2A and mounting members 2. Slots 9 extend from the front of housing 8 toward the rear along surfaces 8B of housing 8 with slots 9 in communication with respective slots 8A to receive mounting members 2.

When shield member 1 is assembled to housing 8, shield section 1A extends along and engages the front surface of housing 8, and leg sections 2A with mounting members 2 are inserted in slots 8A, 9 and the front surface of housing 8.

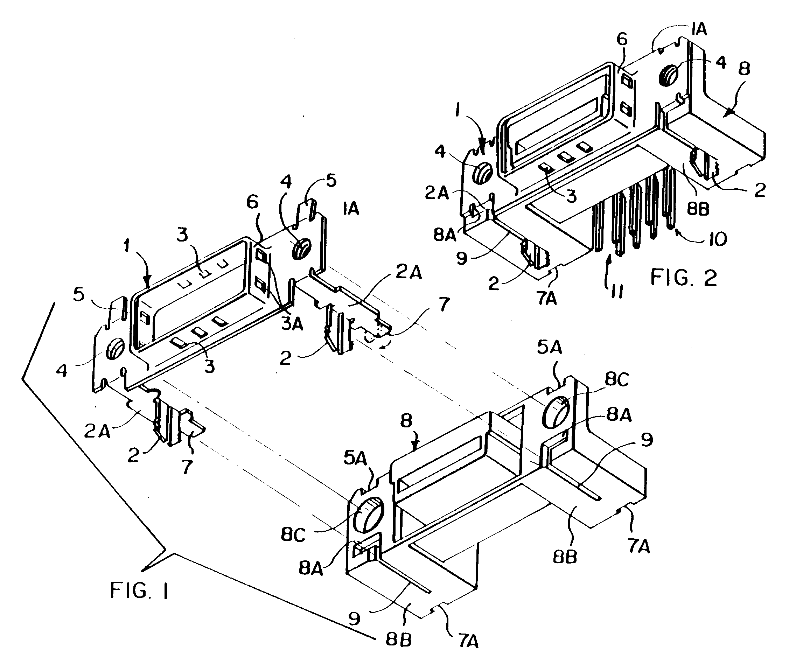

After shield member 1 is placed onto housing 8, lugs 5, 7 are bent into respective recesses 5A, 7A of housing 8 to secure shield member 1 and integral mounting members 2 to housing 8, as shown in Figure 2. Electrical contacts 10 are assembled in housing 8 by a separate process, completing shielded electrical connector 11 as shown in Figure 2.

Housing 8 contains holes 8C to accommodate receiving the screws for fixing the connector to a panel through aligned threaded holes 4 of shield section 1A. Thus, the connector can be fixed to a panel by inserting the fixing screws from the front surface of shield member 1. Shielded connector 11 can be mounted onto a circuit board with mounting members 2 being inserted in corresponding apertures in the circuit board and providing an interference fit therein, thereby temporarily maintaining the connector on the board whereby mounting members 2 can then be soldered to the ground path or land on the board. As can be discerned mounting members 2 constitute a pair of spaced legs which act as spring members. The bottom edges of the spaced legs are tapered from inner edges to outer edges to enable the pair of spaced legs to be readily inserted into the board hole. The outer edges are serrated to frictionally engage the sidewalls of the hole along the thickness of the printed circuit board, thereby maintaining the connector on the circuit board.

Since a shield member is composed of a shield section 1A and mounting members 2 formed integrally therewith, a more reliable electrical continuity therebetween can be ensured. The shield member with the integral mounting members 2, can be easily secured to housing 8 by bending lugs 5, 7 into engagement with the housing. Therefore, the man-hours required for assembly of the shield member having integral mounting members onto the connector can be substantially reduced, whereby a very reliable shielded electrical connector is produced which is easily mounted onto a circuit board by the integral mounting members which temporarily secure the connector to a printed circuit board by frictional engagement in apertures therein and more permanently upon being soldered to a ground plane, thus forming an excellent ground connection therewith.

## Claims

1. A shielded electrical connector for mounting on a circuit board, the connector comprising a dielectric housing (8) having mounting surfaces (8B) for engaging the circuit board, electrical contacts (10) secured in the housing (8) for electrical connection to conductive areas on the circuit board, and a metal shield member (1): secured to the housing (8) and having a shield section (1A) extending along the housing (8) and having integral leg sections (2A) having integral mounting sections (2) projecting therefrom for engagement in holes in the circuit board to maintain the shielded connector on the circuit board; characterized in that the housing (8) is formed with slot means (8A) intersecting said mounting surfaces (8B), said integral leg sections (2A) being disposed in said slot means (8A) with said integral mounting sections (2) extending outwardly of said mounting surfaces (8B).

2. A connector as claimed in claim 1, characterized in that said slot means include first slots (8A) along which the leg sections (2A) extend and second slots (9) communicating with the first slots (8A), the mounting sections (2) extending through the second slots (9).

3. A connector as claimed in claim 1 or 2, characterized in that each mounting section (2) comprises a pair of spaced legs having tapered free ends and serrated outer edges.

4. A connector as claimed in claim 1, 2 or 3, characterized in that the shield member (1) includes lugs (5,7) disposed in recesses (5A,7A) in the housing (8) and thereby securing the shield member (1) to the housing (8).

## Patentansprüche

1. Abgeschirmter elektrischer Verbinder zum Befestigen an einer Leiterplatte, wobei der Verbinder ein dielektrisches Gehäuse (8) aufweist, das Montageflächen (8B) zur Anlage an der Leiterplatte aufweist, wobei elektrische Kontakte (10) in dem Gehäuse zur elektrischen Verbindung mit leitfähigen Bereichen der Leiterplatte angeordnet sind, und wobei ein metallisches Abschirmglied (1) an dem Gehäuse (8) gesichert ist und einen Abschirmbereich (1A) hat, der sich längs des Gehäuses (8) erstreckt und einstückige Fußabschnitte (2A) hat, die einstückige Montageabschnitte (2) aufweisen, die davon zum Eingriff in Löcher in der Leiterplatte vorragen, um den abgeschirmten Verbinder an der Leiterplatte zu halten, **dadurch gekennzeichnet,** daß das Gehäuse (8) mit Schlitzanordnungen (8A) ausgebildet ist, die die Montageflächen (8B) schneiden, wobei die einstückigen Fußabschnitte (2A) in den Schlitzanordnungen (8A) angeordnet sind und die einstückigen Montageabschnitte (2) sich von den Montageflächen (8B) nach außen erstrecken.

2. Verbinder nach Anspruch 1, **dadurch gekennzeichnet,** daß die Schlitzanordnungen erste Schlitze (8A) aufweisen, längs deren sich die Fußabschnitte (2A) erstrecken, sowie zweite Schlitze (9), die mit den ersten Schlitzen (8A) in Verbindung stehen, wobei sich die Montageabschnitte (2) durch die zweiten Schlitze (9) erstrecken.

3. Verbinder nach Anspruch 1 oder 2, **dadurch gekennzeichnet,** daß jeder Montageabschnitt (2) ein Paar beabstandeter Füße aufweist, die abgeschrägte freie Enden und gezackte äußere Kanten haben.

4. Verbinder nach Anspruch 1, 2 oder 3, **dadurch gekennzeichnet,** daß das Abschirmglied (1) Laschen (5, 7) aufweist, die in Ausnehmungen (5A, 7A) in dem Gehäuse (8) angeordnet sind und dadurch das Abschirmglied (1) an dem Gehäuse (8) sichern.

## Revendications

1. Connecteur électrique blindé destiné à être monté sur une plaquette à circuit, le connecteur comportant un boîtier diélectrique (8) présentant des surfaces (8B) de montage destinées à engager la plaquette à circuit, des contacts électriques (10) fixés dans le boîtier (8) pour une connexion électrique avec des zones conductrices sur la plaquette à circuit, et un élément métallique (1) de blindage fixé au boîtier (8) et comportant une partie (1A) de blindage s'étendant le long du boîtier (8) et des parties de pied intégrées (2A) ayant des parties intégrées (2) de montage qui en font saillie pour être engagées dans des trous de la plaquette à circuit afin de maintenir le connecteur blindé sur la plaquette à circuit ; caractérisé en ce que le boîtier (8) est formé de façon à présenter des moyens à fentes (8A) intersectant lesdites surfaces (8B) de montage, lesdites parties de pied intégrées (2A) étant disposées dans lesdits moyens à fentes (8A) de façon que lesdites parties intégrées (2) de montage fassent saillie vers l'extérieur desdites surfaces de montage (8B).

2. Connecteur selon la revendication 1, caractérisé en ce que lesdits moyens à fentes comprennent des premières fentes (8A) le long desquelles les parties de pied (2A) s'étendent et des secondes fentes (9) communiquant avec les premières fentes (8A), les parties de montage (2) s'étendant dans les secondes fentes (9).

3. Connecteur selon la revendication 1 ou 2, caractérisé en ce que chaque partie (2) de montage comporte une paire de pieds espacés ayant des extrémités libres effilées et des bords extérieurs dentelés.

4. Connecteur selon la revendication 1, 2 ou 3, caractérisé en ce que l'élément de blindage (1) comporte des pattes (5, 7) disposées dans des évidements (5A, 7A) du boîtier (8) et fixant ainsi l'élément de blindage (1) au boîtier (8).
